(19) Europäisches Patentamt

European Patent Office

Office européen des brevets

(11) EP 1 258 788 A2

(12) EUROPEAN PATENT APPLICATION

(43) Date of publication:
20.11.2002 Bulletin 2002/47

(51) Int Cl.⁷: **G05B 13/02**

(21) Application number: 02009779.6

(22) Date of filing: 30.04.2002

(84) Designated Contracting States:
**AT BE CH CY DE DK ES FI FR GB GR IE IT LI LU
MC NL PT SE TR**
Designated Extension States:
**AL LT LV MK RO SI**

(30) Priority: 01.05.2001 US 845210

(71) Applicant: Xerox Corporation
Rochester, New York 14644 (US)

(72) Inventors:
• Fromherz, Markus P.J.
Palo Alto, California 94303 (US)
• Jackson, Warren B.
San Francisco, California 94116-1407 (US)

(74) Representative: Grünecker, Kinkeldey,
Stockmair & Schwanhäusser Anwaltssozietät
Maximilianstrasse 58
80538 München (DE)

(54) **Incremental distributed actuation for large assemblies of implementation units**

(57) Apparatus and methods that modify an allocation solution for a plurality of implementation units based on a determination of whether the solution can be improved by changing the operation of the implementation units.

FIG. 1

**Description**

BACKGROUND OF THE INVENTION

1. Field of Invention

This invention is directed to apparatus and methods of modifying an allocation solution for a group of implementation units.

2. Description of Related Art

Smart matter systems are systems with a large number of elements such as sensors, actuators, and/or allocators. A major problem for such systems is to coordinate the actions of many elements in order to obtain a desired result or goal for the entire smart matter system. The desired result is achieved by controlling or allocating a particular action to each individual actuator to obtain a cumulative actuation over all the actuators. The desired individual actuation of each actuator can be achieved in a number of ways. However, the actuation must be accomplished in some optimal or near-optimal way while satisfying a number of constraints.

For systems having a relatively small number of actuators, it is relatively easy to determine the desired individual actuation to obtain an overall system actuation, e.g., using an exhaustive search method. Unfortunately, the number of ways to produce a desired collective result increases exponentially with the number of actuators to be controlled. Thus, the problem of allocating actuation among a number of actuators becomes considerably more difficult as the number of actuators increases in the smart matter regime. Moreover, as the number of actuators increases, the time available to compute the allocation often decreases because of the need to communicate the allocation decision to the increased number of actuators.

A related art method of allocating actuators involves an exhaustive search technique, whereby a systematic search is conducted through all possible actuation allocations that are able to accomplish the desired result.

Another related art method of allocating actuation involves solving a mixed integer nonlinear programming problem. The allocation problem is cast as a mixed integer nonlinear programming problem over a set of continuous and integer variables to select the actuation for each actuator. Various methods, such as branch-and-bound, Bender's decomposition, and outer approximations are used to solve mixed integer nonlinear programming problems. These methods solve the optimization problem without integer constraints and then incrementally enforce the integer constraints. The result is that, rather than computing all of the exponential number of combinations that are possible, only promising branches of the search tree are computed with the expense of solving a nonlinear optimization problem at each node of the tree.

Other related art methods to solve the constrained optimization for the actuator allocation use standard optimization methods such as interior point or active set methods.

However, these related art methods have numerous disadvantages and shortfalls.

SUMMARY OF THE INVENTION

The related art method of allocating actuation through an exhaustive search technique may operate within certain acceptable parameters for smart matter systems that require control of only a relatively small number of actuators, because all of the possible solutions can be computed in a relatively short period of time. However, the computational effort for exhaustive search grows exponentially with the number of actuators and the number of actuator states, and is therefore not feasible if the number of actuators increases beyond a certain limit, which is typically less than 10 depending on the processor speed and control bandwidth desired.

The related art method of using mixed integer nonlinear programming to allocate actuators also has disadvantages. The computations at each branch are more complex because they involve the solution of a constrained nonlinear programming problem at each step. Moreover, the algorithms for this method require full knowledge of the system in a central location, and the allocations are difficult to distribute among a number of processors. Thus, for methods employing nonlinear programming techniques, if the hardware of a system is modular in nature, extensive communication is required to provide the central allocator with the required information.

The related art methods of allocating actuators using standard optimization techniques also have disadvantages. These types of methods require solutions that result in large deviations from optimality, because the solutions are restricted to binary values and numbers of actuators less than 100. These techniques also require universal knowledge about the system and therefore make heavy use of communications, which constitutes a large cost in distributed systems.

As a result of the shortcomings of the above related art methods, new methods and apparatus for allocating actuation are needed for smart matter systems.

The present invention provides methods and apparatus that provide allocation solutions for a plurality of implementation units.

The present invention provides methods and apparatus that hierarchically decompose an actuation allocation and balance the need for rapid computation against optimality.

The present invention separately provides methods and apparatus that are able to allocate actuation for systems having differing numbers of implementation units , ranging from a few implementation units (e.g., 10) to a large number of implementation units (greater than 10000).

The present invention separately provides methods and apparatus for allocating control of implementation units that minimize the need for communication with a system controller.

The present invention separately provides methods and apparatus that use continuous high level solutions to break an actuator allocation problem into smaller problems that can be solved in an optimal way or by breaking the smaller allocation problem down into yet smaller problems.

The present invention separately provides methods and apparatus that decompose a plurality of actuators into groups of actuators and further decompose the groups into smaller groups, such as modules and submodules, until the groups include a number of actuators that a local optimal search can be performed, wherein the positions of the actuators do not have to be known for the decomposition of the actuators and the details of a submodule are not required to be known by the module that includes the submodule.

The present invention separately provides methods and apparatus that decomposes a plurality of actuators into groups of actuators wherein the grouping of actuators can be an arbitrary grouping.

The present invention separately provides methods and apparatus wherein the time to compute the near optimal actuator allocation scales with the number of actuators.

The present invention separately provides methods and apparatus for allocating actuation that are hierarchical in nature so the computation of the allocation of the actuators is adaptable to the structure of the smart matter system and the smart matter communication system.

The present invention separately provides methods and apparatus for actuator allocation that are suitable for tiled actuation.

The present invention separately provides methods for actuator allocation that are capable of being implemented by multiprocessors.

The present invention separately provides methods and apparatus for providing an allocation solution by modifying an existing allocation solution.

The present invention separately provides methods and apparatus for providing an improvement of other approximate allocation solutions that have been created by any allocation method.

The present invention separately provides methods and apparatus for modifying an allocation solution created by a hierarchical distribution algorithm method of the present invention.

The present invention separately provides methods and apparatus for quickly finding a near-optimal modified allocation solution.

The present invention separately provides methods and apparatus for an algorithm that solves the repeated actuator allocation problem by taking an approximate allocation solution for a current or a previous, slightly different allocation problem and optimizing it for the current problem.

The present invention separately provides methods for modifying an allocation solution that can be combined with a hierarchical algorithm, whereby a previous decomposition of a plurality of implementation units can be reused making the methods suitable for control that adapts to the structure of the implementation units.

The present invention separately provides methods and apparatus for modifying an allocation solution that can reuse precomputed information about groupings of implementation units such that only a search for local implementation unit changes are required.

The present invention separately provides methods and apparatus for modifying an allocation solution that monotonically improves the allocation solution.

The present invention separately provides methods and apparatus for modifying an allocation solution that results in minimizing the number of actuator changes, thus decreasing communication overhead and extending actuator life.

These and other features and advantages of this invention are described in or are apparent from the following detailed description of various exemplary embodiments of the apparatus and methods according to this invention. In one embodiment of the method described in claim 1 and 7 the constraint is torque applied to an object by at least a portion of the plurality of implementation units. In a further embodiment the method further comprises:

determining whether the modified allocation solution includes a second error for the at least one operation constraint; and

if there is a second error, developing a second modified allocation solution by altering the modified allocation solution for the operation of the at least one of the implementation units and maintaining the allocation status of the at least one other operation second constraint.

In a further embodiment the determining and developing steps are continuously repeated for each modified allocation solution developed in the developing step until a threshold is reached.

In a further embodiment the threshold is a modified allocation solution that has a predefined error tolerance.

In a further embodiment the threshold is a time limit.

In a further embodiment the threshold is a certain number of iterations of developing modified allocation solutions.

In a further embodiment at least a portion of the plurality of implementation units apply a torque to an object; the determining step includes determining that there is an error in the allocation solution if an expected torque is greater than a torque requested by the allocation solution; and

the developing step includes identifying a flip pair of the plurality of implementation units that decrease the expected torque and altering the allocation solution to reverse the operation of each of the implementation units of the flip pair.

In a further embodiment the step of identifying the flip pair includes searching a table of implementation unit flip pairs.

In a further embodiment at least a portion of the plurality of implementation units apply a torque to an object; the determining step includes determining that there is an error in the allocation solution if an expected torque is less than a torque requested by the allocation solution; and

the developing step includes identifying a flip pair of implementation units that increases the expected torque and altering the allocation solution to reverse the operation of each of the implementation units of the flip pair.

In a further embodiment the step of identifying the flip pair includes searching a table of implementation unit flip pairs.

BRIEF DESCRIPTION OF THE DRAWINGS

Various exemplary embodiments of systems, apparatus and methods according to this invention will be described in detail, with reference to the following figures, wherein:

Fig. 1 is a schematic of an exemplary embodiment of a many element system according to this invention;

Fig. 2 is a schematic of an exemplary embodiment of an air jet paper transport system, according to this invention;

Fig. 3 is a schematic of an exemplary embodiment of an array of actuators, according to this invention;

Fig. 4 is flow chart outlining an exemplary embodiment of a method for allocating an overall objective for a smart matter system, according to this invention;

Fig. 5 is a schematic of an exemplary embodiment of a physical heuristic grouping of an array of actuators, according to this invention;

Fig. 6 is a schematic of an exemplary embodiment of a logical heuristic grouping of an array of actuators, according to this invention;

Fig. 7 is a chart displaying a method of error allocation throughout a plurality of subdomains according to one exemplary embodiment of the present invention;

Fig. 8 displays a schematic representation of an exemplary embodiment of an allocation system including a solution modification unit;

Fig. 9 displays one exemplary embodiment of a method for modifying an allocation solution;

Fig. 10 displays another exemplary embodiment of a method for modifying an allocation solution;

Fig. 11 is a schematic of one exemplary embodiment of an array of actuators aligned in an x-direction;

Fig. 12 is an exemplary embodiment of a method for modifying an allocation solution;

Fig. 13 displays a schematic of the many element system of Fig. 1, further including an exemplary solution modification unit; and

Fig. 14 displays a schematic of the many element system of Fig. 1, further including exemplary solution modification units disposed at an intermediary level of the allocator.

DETAILED DESCRIPTION OF PREFERRED EMBODIMENTS

There are many types of many element systems that include implementation units, wherein an overall goal of the entire system is desired, but because of the aforementioned problems, it is difficult to allocate instructions to the implementation units to obtain that overall goal. The present invention provides for allocating that overall goal to groups of implementation units, i.e. subdomains or implementation modules, as well as individual implementation units. Thus, according to the present invention, an array of implementation units is divided into subdomains where the desired goal is provided to the subdomains. Also, in accordance with the present invention, the subdomains can also be divided into further subdomains and the process can be continued until the last subdomains have a sufficiently small number of implementation units to perform a local optimal search. The subdomains do not have to align exactly with any particular implementation unit, but rather they can represent an arbitrary grouping of implementation units. Further, the positions or arrangements of the implementation units do not have to be known for decomposition of the overall goal and the details of the lower level subdomains can be hidden from upper level subdomains.

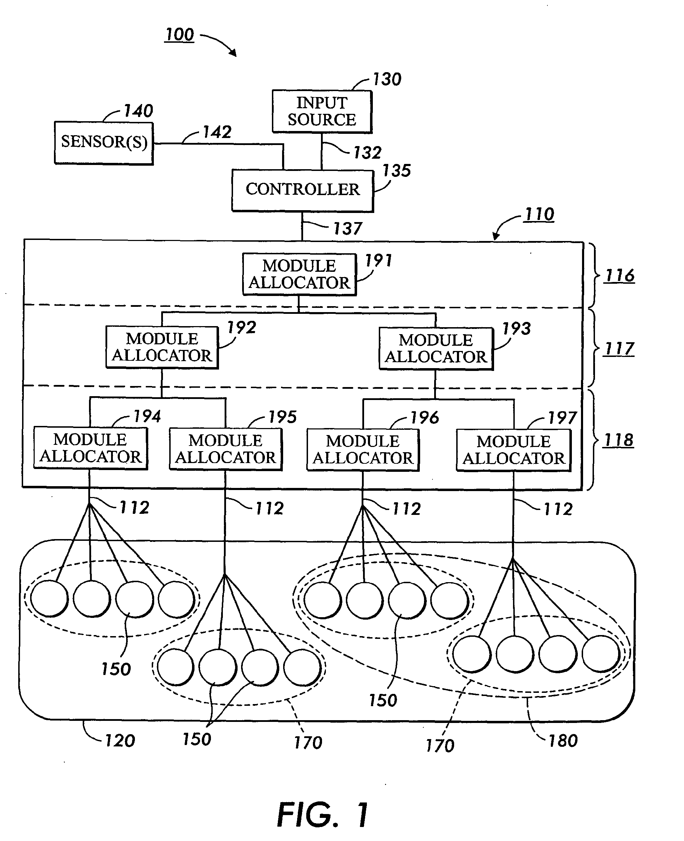

Fig 1 is a schematic that shows one exemplary embodiment of a many element system 100 having a distributed actuation allocation, according to this invention. The system 100 can be any type of system that is used in any number of different types of applications, such as but not limited to an air-jet paper transport systems, robotic systems and the like. System 100 includes a system allocator 110, a plurality of implementation units 120, an input device 130, a controller 135 and at least one sensor 140.

The plurality of implementation units 120 includes individual implementation units 150. The implementation units 150, under the control of the allocator 110, operate to create a desired result or action. In various exemplary embodiments, the plurality of implementation units 120 are an array of implementation units. In various exemplary embodiments, the implementation units 150 are actuators. In other various exemplary embodiments, the implementation units 150 are air jets that act upon a piece of paper to move the paper from one position to another.

The input device 130 communicates with the controller 135 along communication link 132. The input device 130 provides the controller 135 with an overall objective. In various exemplary embodiments the input device 130 is a computer or a software program configured to generate the overall objective for the system 100. In other various exemplary embodiments the input source 130 is, but is not limited to, a joystick, mouse, or other graphical input source read by a computer where the objective for the system 100 is related to the output of the graphical input source. In other various exemplary embodiments, the input source 130 is a higher-level control element or elements of a system that includes system 100. An example of a higher-level control element is a job scheduler of a printing system which sends paper motion goals (desired trajectories) to a paper handler (an example of a system 100).

It should be appreciated that in various exemplary embodiments, the overall objective can be, but is not limited to, a trajectory of an object or in other various exemplary embodiments, a desired state of the implementation units.

The at least one sensor 140 communicates with the controller 135 along a communications link 142. The at least one sensor 140 monitors or detects the current status of the actuation of the plurality of implementation units 150 and provides the status information to the controller 135 along communications link 142. In other various exemplary embodiments, the at least one sensor 140 detects the status of an object upon which the plurality of implementation units 150 act.

The controller 135 receives the overall objective from the input source 130. The controller 135 computes a system goal, based on the overall objective. In various exemplary embodiments that include at least one sensor 140, the controller 135 receives the current status information from the at least one sensor 140 and computes instructions, based on the overall objective and the current status information. In various exemplary embodiments, the controller 135 is a proportional derivative controller. It should be appreciated that any known or later developed controller may be used as controller 135.

In various exemplary embodiments the system goal is a force allocation, instruction or goal for the implementation units 150 to achieve. In various exemplary embodiments, the system goal is a continuous value. In other various exemplary embodiments, the system goal is a discrete value.

The allocator 110 receives the instructions from the controller 135. The allocator 110 implements an allocation algorithm to determine which implementation units should be actuated in order to achieve the overall objective for the system 100. The allocator 110 communicates with the plurality of implementation units 120 along at least one communication link 112.

In various exemplary embodiments, the plurality of implementation units 120 are divided into groups of implementation units. The groups of implementation units can be further divided until the number of implementation units in the groups is sufficiently small enough to allow the allocator 110 to perform a local optimal allocation search.

The plurality of implementation units are divided into a plurality of implementation unit modules 170 and 180. In various exemplary embodiments the implementation unit modules 170 include individual implementation units 150. In various exemplary embodiments the implementation unit modules 180 include at least one other implementation unit module 170 as a submodule. In various exemplary embodiments, more than one of the implementation unit modules 170 include the same individual implementation unit 150, (this arrangement is not shown in Fig. 1). In various exemplary embodiments, more than the implementation unit module 180 includes the same implementation unit module 170 (this arrangement is not shown in Fig. 1). It is understood that the plurality of implementation units 150 may be further divided and grouped in many varying arrangements.

In various exemplary embodiments, the allocator 110 allocates the overall objective to the plurality of implementation units 120 by expressing the overall objective in terms of solutions, module allocation, sub-goals, sub-objectives or sub-instructions for each of the modules 170 and 180. The solutions for each of the modules 170 and 180 serve as constraints for a solution for the overall objective allocation . The solution for each module 170 may in turn be decomposed into further subsolutions for submodules, thus providing hierarchical decomposition. The hierarchical decomposition can be continued by the allocator 110 until the submodules include a sufficiently small enough number of individual implementation units 150 so that the allocation solution for that submodule can be performed quickly using a conventional technique, such as but not limited to an exhaustive search technique.

In various exemplary embodiments, the allocator 110 includes a plurality of allocation levels. In an exemplary embodiment, shown in Fig. 1, the allocator 110 has a top level 116, a middle level 117 and a bottom level 118. In various exemplary embodiments, the allocator 110 includes as few as one allocation level to as many allocation levels as necessary to communicate to all implementation units such that the allocation can be performed within desired time constraints.

The top level 116 includes a module allocator 191. The middle level 117 includes module allocators 192 and 193. The bottom allocation level 118 includes module allocators 194, 195, 196 and 197. The allocation levels 116, 117 and 118 are arranged in a hierarchical arrangement, whereby the module allocator 191 in the top level 116 controls the module allocators 192 and 193 of the middle level 117. The module allocator 192 of the middle allocator level 117 controls the module allocators 194 and 195 in the bottom allocation level. The module allocator 193 of the middle allocation level 117 controls the module allocators 196 and 197 of the bottom allocation level 118. The module allocators 194, 195, 196 and 197 of the bottom level 118 control respective groups of implementation units 170 or individual implementation units 150.

It should be appreciated that the controller 135 and actuator 110 shown in Fig. 1 can be implemented as portions of a suitable system, manager or programmed general purpose computer. Alternatively, the controller 135 and actuator 110 can be implemented using an ASIC, a FPGA, a PEDL, a PLA, or a PAL, or using physically distinct hardware circuits, such as discrete logic elements or discrete circuit elements. The particular form the controller 135 and actuator 110 shown in Fig. 1 will take is a design choice.

The links 112, 132, 137 and 142 can each be any known or later developed device or system for connecting the array of implementation units 120, the goal generation device 130, and the at least one sensor 140, respectively, to the allocator 110, including a wire, a direct cable connection, a connection over a wide area network or a local area network, a connection over an intranet, a wireless connection, a connection over the Internet, or a connection over any other distributed processing network or system. In general, the links 112, 132, 137 and 142 can be any known or later developed communication system or structure usable to connect the respective devices.

It should be appreciated that the plurality of implementation units 120, the input device 130, the controller 135 and the allocator 110 do not have to be physically located together. Furthermore, it should be appreciated that the allocator 110 and the controller 135 can be integrated into a single device. It should also be appreciated that the input source 130, the controller 135 and the allocator 110 can be integrated into a single device.

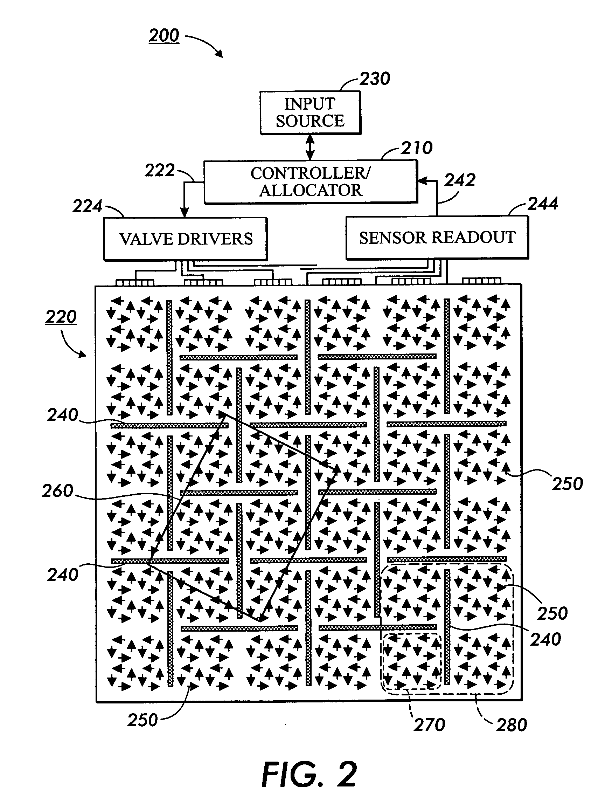

Fig. 2 shows an air jet paper transport system 200, which is one exemplary embodiment of a many implementation unit system 100. The system 200 includes a controller/allocator 210, which is an exemplary embodiment of a device that includes a controller integrated with an allocator. In various exemplary embodiments the controller/allocator 210 includes hierarchical allocation levels similar to the allocator 110.

The system 200 also includes an array of air jets 220 and an input source 230, and a plurality of sensors 240. These devices are exemplary embodiments of the array 120, the input device 130 and the at least one sensors 140, respectively.

Further, the controller/allocator 210 is in communication with the input source 230 via communication link 232, the sensors 240 via communication link 242 and the air jets via communication link 222. Links 222, 232 and 242 are exemplary embodiments of links 122, 132 and 142.

Disposed along link 222 is at least one valve driver device 224, which controls the opening and closing of the individual air jet valves 250 based on instructions received from the allocator via link 222. The at least one valve driver device 224 may be any known or later developed valve driver device.

Disposed along link 242 is at least one sensor readout 242, which receives signals from the sensors 240 via conventional techniques and/or devices, and provides the sensor signals to the controller 210 via link 242. The sensor read out 242 may be any known or later developed device.

An object 260 is disposed over the array of air jets 250. In this exemplary embodiment, the object 260 is a piece of paper. The air jets 250 will, under the control of the controller/allocator 210, move the object 260 to a particular position or orientate the object 260 in a particular orientation.

The sensors 240 are dispersed throughout the array 220. In various exemplary embodiments, the sensors 240 are CMOS image sensor bars located throughout the actuation surface. The sensors are wired to detect edge positions of the object 260. The spacing of the sensors 240 is such that, for typically sheet sizes of paper, there are always at least four points where a paper edge intersects the sensors 240. Thus, the x, y, and angular positions of the object 260 can be determined as the object 200 moves over the array 220. In various exemplary embodiments, readouts of the sensors 240 and position calculation take well less than 1 ms.

In various exemplary embodiments, the array of air jets 220 includes 576 angled air jets. The angled air jets are oriented in one of four different directions (left, right, up, and down) and distributed equally in the array 220. In this exemplary embodiment, the array of air jets 220 may be thought of as consisting of 36 (or 6x6) "tiles"/actuator modules 270 of air jets. In various exemplary embodiments, each tile/actuator module 270 includes sixteen (or 4x4) air jets. The actuator modules 270 can be grouped together to form larger actuation modules 280. In embodiments that include the large actuator modules 280, the actuator modules 270 can be thought of as submodule actuators of the larger module actuator 280. In accordance with the present invention, it should be appreciated that the larger actuator modules 280 could be grouped together to form even larger actuator modules and that the actuator modules 270 could be further decomposed into further actuation submodules.

In various exemplary embodiments, individually computer-addressable electrostatic flap valves control the flow of air through each air jet 250. Note, the source of the air is not shown. The air from a jet impinges on the object 260. In an exemplary embodiment, wherein the object 160 is a sheet of paper, the air coming from the air jets 250 makes the paper float above the array 220. In various exemplary embodiments, the paper floats roughly 2 mm above the exit of the air-jets 250. Due to the viscous drag of the air against the paper, a force is applied to the paper largely confined in a small circular region around the impact point of the air on the paper. Forces on the order of $10^{-4}$ Nt per jet for supply pressures of 1 kPa are typical. See Biegelsen, David K; Panides, Elias; Swartz, Lars E; Jackson, Warren B; Berlin, Andrew A. Characterization of Shear Stress Field Induced By Obliquely Impinging Air Jets. MEMS-Vol. 1, Microelectromechanical Systems (MEMS) (ASME 1999), pp. 385-389, which is incorporated herein by reference.

The forces of each air jet 250 add together as a linear superposition. Because the valves of each air jet 250 are either open or closed, each air jet 250 is essentially a binary force actuator. The entire array 220 can be viewed as a distributed array of binary force actuators. In various exemplary embodiments, the response time of an air jet 250, namely the time it takes for an air jet 250 to respond to a command, depends on the voltage applied to the flap valve of the air jet 250, as well as the air supply pressure. In various exemplary embodiments, the response time of an air jet 250 is typically on the order of 1-2 ms.

The state of object 260 can be described by six values. Particularly, the object 260 can have an x position, a y position, an angular position, a velocity in the x direction, a velocity in the y direction and an angular velocity about an axis (z axis) perpendicular to the plane of the air jets.

The controller/allocator 210 must choose from these multiple air jets 250 to apply the necessary forces to move the object 260 toward a desired overall objective. This arrangement illustrates that the problem of force allocation to actuators is an instance of the general problem of allocating a desired macro-level actuation to the micro-level actuators of a highly distributed system. In this exemplary embodiment, the actuators are binary air jets, which creates an integer programming problem. The controller/allocator 210 employs allocation methods, according to this invention, that solves these problems.

As the object 260 moves across the array 220, the positions of sheet edges are sensed by the sensors 240. These sensor readings are used by the controller/allocator 210 to compute the x, y, and angular positions of the object 260. This position information over time is used to also compute the x, y and angular velocities of the object 260. The positions and velocities of the object 260, are the object state. The controller/allocator 210 computes the object state and compares it to a desired state given by a predetermined or dynamic trajectory, which is originally based on the overall objective from the input source 230.

In various exemplary embodiments, the controller/allocator 210 includes a plurality of allocation levels, each having at least one module allocator, not shown in Fig. 2, which are arranged in a hierarchical manner. The plurality of module allocators are used to compute the desired x and y forces and a torque about the z-axis (perpendicular to the object 260) for each larger module actuator 280 and for each module actuator 270. submodule. These forces are then allocated to the individual air jets 250 that together apply the desired actuation forces to the object 260. In various exemplary embodiments, this control cycle is executed once every millisecond. It should be appreciated, that in other various exemplary embodiments, the controller/allocator 210 may include additional and/or separate allocation devices having module allocators to assist in allocating the overall objective.

Exemplary paper transport systems are disclosed in the following: (1) Berlin, Andrew; Biegelsen, David; Cheung, Patrick; Fromherz, Markus; Goldberg, David; Jackson, Warren; Panides, Elias; Preas, Bryan; Reich, James; and Swartz, Lars, "Paper Transport Using Modulated Airjet Arrays," IS&T's NIP 15:1999 International Conference on Digital Printing Technologies, Orlando, Florida, October, 1999, pp. 285-288; and (2) Biegelsen, David; Berlin, Andrew; Cheung, Patrick; Fromherz, Markus; Goldberg, David; Jackson, Warren; Preas, Bryan; Reich, James; and Swartz, Lars, "AirJet Paper Mover: An Example of Meso-Scale MEMS," SPIE, Micromachined Devices and Components VI, Santa Clara, California Vol 4176, September, 2000, pp. 122-129.

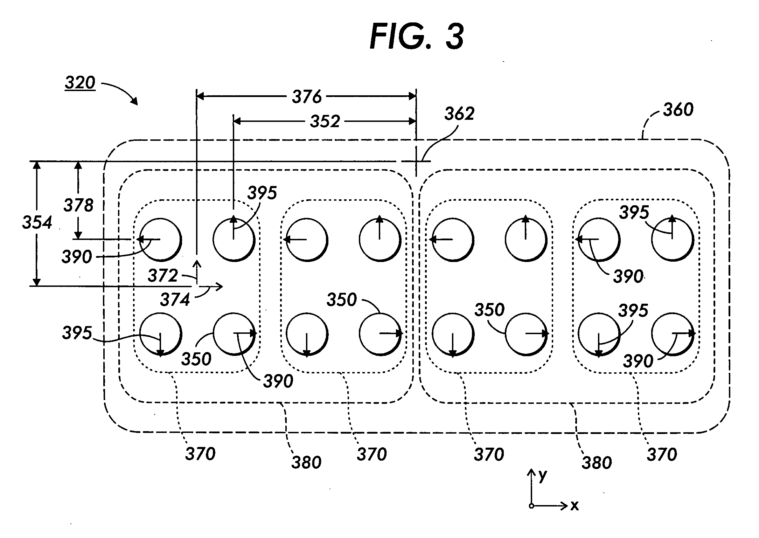

Fig. 3 shows one exemplary embodiment of an array of air jets 320, which is an exemplary embodiment of the array of actuators 120.

The array 320 includes a plurality of air jets 350. The array 320 has been modeled as a set of $N$ jets on a 2-d grid. An air jet $i$ ($i$ in 1,...,$N$) is represented by its:

position $(x_{xi}, y_{xi})$;

force domains $d_{xi}$ and $d_{yi}$; and

forces $f_{xi}$ and $f_{yi}$ $(f_{xi} \in d_{xi}, f_{yi} \in d_{yi})$.

The position ($x_i$ identified as 352, $y_i$ identified as 354) is given relative to the center of mass 362 of an object 360. In various exemplary embodiments, the center of mass 362 is approximated. However, in other various exemplary embodiments, the center of mass 362 is provided to the controller or the system is calibrated to learn the center of mass 362. In various exemplary embodiments, only the actuators under the object 360 at the time of interest are modeled.

A force domain of an individual air jet 350 may be a continuous interval $d_i = [f_{min}, f_{max}]$ or a discrete set of possible values $d_i = \{f_{min}, f_{min}+f_{inc}, f_{min}+2f_{inc}, ..., f_{max}\}$ for some increment value $f_{inc}$. In various exemplary embodiments, an air jet 350 can only apply an x-force 390 or a y-force 395 in either a positive or a negative direction. In various exemplary embodiments, the air jet 350 can only be on or off because of a binary valve that controls the air flow through the air jet 350. Thus, for an x directional air-jet, the force domain is

$$d_{xi} = \begin{cases} \{0, f_{max}\} & (\text{positive x} - \text{jet}) \\ \{-f_{max}, 0\} & (\text{negative x} - \text{jet}) \end{cases} \qquad \text{Eq. (1)}$$
$$d_{yi} = \varnothing$$

The equivalent holds for y-directional air-jets. In various exemplary embodiments, the time for a jet valve to switch states is generally on the order of the control cycle, namely 1-2 milliseconds, and thus negligible relative to the motion of the object 360. Thus, it is assumed for the following discussion purposes that the jet valves can switch states (open and closed) instantaneously.

In various exemplary embodiments, the air jets 350 may be grouped together to form tiles. It should be understood that each actuator module 370 may contain any number of individual air jets 350. The air jet module 370 may contain both x-directional and y-directional air jets, and thus have both an x-force component 372 and a y-force component 374. For example, the maximum force for a module air jet 370 with $n$ x-jets and $n$ y-jets, with equal numbers of jets in positive and negative directions, is $f_{MAX} = {}^n/_2 f_{max}$ in either direction. Thus, the domains for such a module air-jet 370 are:

$$d_{xi} = d_{yi} = \{-f_{MAX}, -f_{MAX}+f_{max}, ..., 0, ..., f_{MAX}\} \qquad \text{Eq.(2)}$$

The actuator module 370 has a position ($x_{xi}$ identified as 376, $y_{xi}$ identified as 378) that may be given as the centroid of the bounding box or the average position of air jets 350 within its bounds.

In various exemplary embodiments, an air jet module includes a group of actuator modules 370, rather than individual actuators 350. An example of such an air jet module is identified as 380. The air jet module 380 is similar to the air jet module 370 in that it can have both x and y force components, a position, and a force domain.

Together, the air jets 350 in an air jet module 370 or the entire system or array of actuators 320 deliver an x-force $F_x$, a y-force $F_y$, and a z-torque $T_z$ to the object 360.

In various exemplary embodiments, an actuator module $i$ contributes additively with forces $f_{xi}$ and $f_{yi}$ to the system's x and y-forces, respectively. Furthermore, the force $f_{xi}$ contributes with $-y_i f_{xi}$ to the z-torque (about the center of mass 362 of the object 360), and the force $f_{yi}$ contributes with $x_i f_{yi}$. In other words, the z-torque delivered by the actuator module $i$ is $t_{zi} = x_i f_{yi} - y_i f_{xi}$. In various exemplary embodiments, the same holds for individual air jets 350, except that each air jet 350 delivers only either an x-force or a y-force. The total x-force $F_x$, y-force $F_y$, and z-torque $T_z$ acting on the object 360 are determined according to the following linear summation model:

$$F_x = \sum_{i=1}^{N} f_{xi}$$
$$F_y = \sum_{i=1}^{N} f_{yi} \qquad \text{Eq. (3)}$$
$$T_z = \sum_{i=1}^{N} x_i f_{yi} - \sum_{i=1}^{N} y_i f_{xi}$$

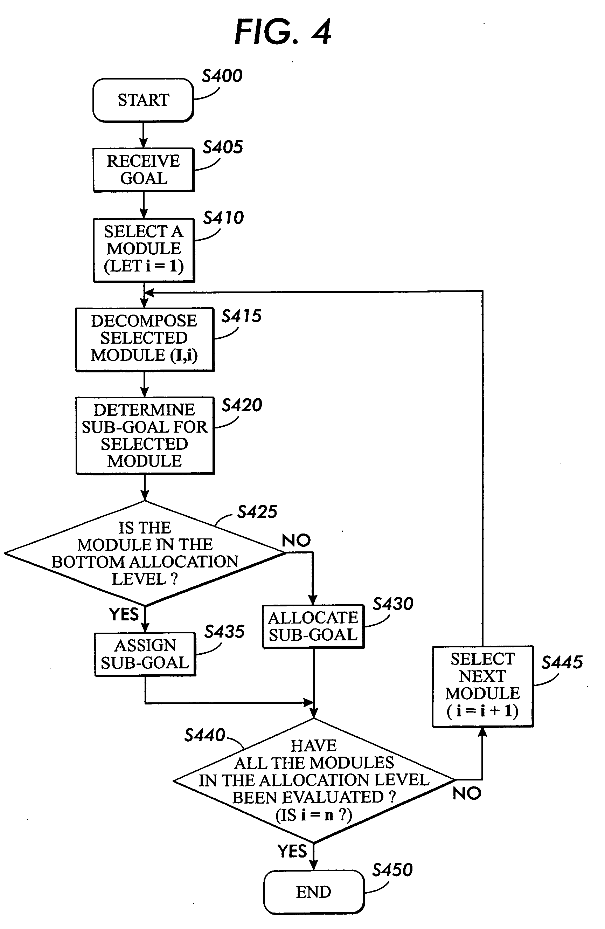

Figure 4 displays one exemplary embodiment of a method of hierarchically allocating a force for a many actuator system, in accordance with the present invention. In various exemplary embodiments, this method is employed by an allocator within a many actuator system. In other various exemplary embodiments, this method is employed by a plurality of level allocators within a many actuator system.

Because the number of actuators greatly exceeds the dimensionality of a control command (desired goal) *U,* wherein $U = (F_x\ F_y\ T_z)$, there are many ways of assigning the actuation to the actuators. In general, it is desirable to use the additional degrees of freedom to attain other desirable goals and thus select the most desirable allocation out of many possible actuator configurations. In other words, the force allocation problem can be viewed as a constrained optimization problem, where the constraints are both the domain constraints of the actuators and the relations between individual actuators and the total delivered forces (Eq. (2) and Eq. (3)). This optimization problem is solved at each control time step in order to determine which actuators should be activated. Precise generation of the required action is not usually possible because the actuation is discrete. In general such a discrete optimization problem is NP-hard, i.e., actuation assignment computation scales exponentially with the number of actuators. On the other hand, for arrays of actuators having a large number of actuators, the actuation approaches a continuum limit, and the problem becomes easy to solve approximately. Therefore, a desirable property for a force allocation method is to solve the discrete optimization problem optimally for small numbers of jets, provide a near-optimal solution for intermediate numbers of jets, and approach the continuum for large numbers of jets, as is accomplished by the present invention.

In various exemplary embodiments for methods of allocating forces according to the present invention, an optimal assignment of actuation can be obtained by an exhaustive search, a discrete optimization solver, or a lookup table of precomputed solutions for a small number of actuators (e.g., equal to or less than 10 for the air jet example running with a loop time of 1 ms on a typical digital signal processor). In various exemplary embodiments for methods of allocating forces according to the present invention, the allocation problem is decomposed into smaller sub-problems in a near optimal manner using continuous solutions as approximations, for a large number of actuators (e.g. equal to or greater than 10 for the air jet example running with a loop time of 1 ms on a typical digital signal processor). In other various exemplary embodiments, each sub-problem may be further decomposed into yet smaller sub-problems, or, if sufficiently small, the sub-problem is solved optimally using conventional methods, such as, but not limited to, look-up tables.

In various exemplary embodiments of a method for allocating a force according to the present invention, decomposition into sub-problems includes dividing the actuators into modules (groups of actuators) and then assigning responsibility to produce a required force to each module.

The exemplary method shown in Fig. 4, begins in step S400 and proceeds to step S405, wherein the goal that needs to be allocated is received. In various exemplary embodiments, the goal is a force. A particular level controlled by either a system allocator or a module allocator is received. In various exemplary embodiments, the goal received is the overall goal that is received by the allocator 110 from the goal generation device 130. In other various exemplary embodiments, the goal received is a force allocation from an allocator 114 in the top level 116 received by an allocator 114 located within the middle level 117.

In various exemplary embodiments, the top level allocation is identified as Allocate(*U,I,n*)*,* wherein: *U* represents the overall task for the entire array of actuators and is represented as $U = (F_x\ F_y\ T_z)^T$; *I* is an identifier string or list of numbers, which denotes the level of the system (the top level is level 1 and an *I* of "1.2" indicates module 2 in level 2 within the top level 1); the *n* denotes the number of modules or jets within this level (for the top level, *n* is 1).

In step S410, the first module is selected, i.e. *i*, which is an index representing modules within a level, is set to be equal to one. For the exemplary top level 116, shown in Fig. 1, there is only one allocator and thus only one module. Accordingly, that module is selected. For the exemplary middle level 117, shown in Fig. 1, there are two modules, each corresponding to an allocator 114. For the exemplary bottom level 118, shown in Fig. 1, there are four modules, each corresponding to an allocator 114.

The method proceeds to step S415, wherein the current module *i* is decomposed. To decompose a module, whether it is for the entire system, i.e. the top level, or for a sub level, such as the middle level, a decomposition function is used. In various exemplary embodiments, the decomposition function is represented as:

$$[n_i, r_i, w_i] = \text{Decompose}(I, i)$$

The decomposition process selects module $i$ in level $I$ and returns the number $n_i$ of actuators or submodules, submodule position $r_i = (x_i y_i)$, and weights $w_i$ for the allocation function, which are discussed further below. This decomposition function makes heuristic choices, which are discussed further below, for hierarchical decomposition of the module. If no (further) hierarchical decomposition is desired, i.e., it is not desired to split the current module into so-called sub-modules or subdomains, then this function decomposes module $i$ into its $n_i$ actual jets, as would be done, for example, with the modules within the bottom level 118 of Fig. 1. The grouping of the plurality of actuators into actuator modules may be predetermined or computed dynamically based on, for example, a load-balancing criterion.

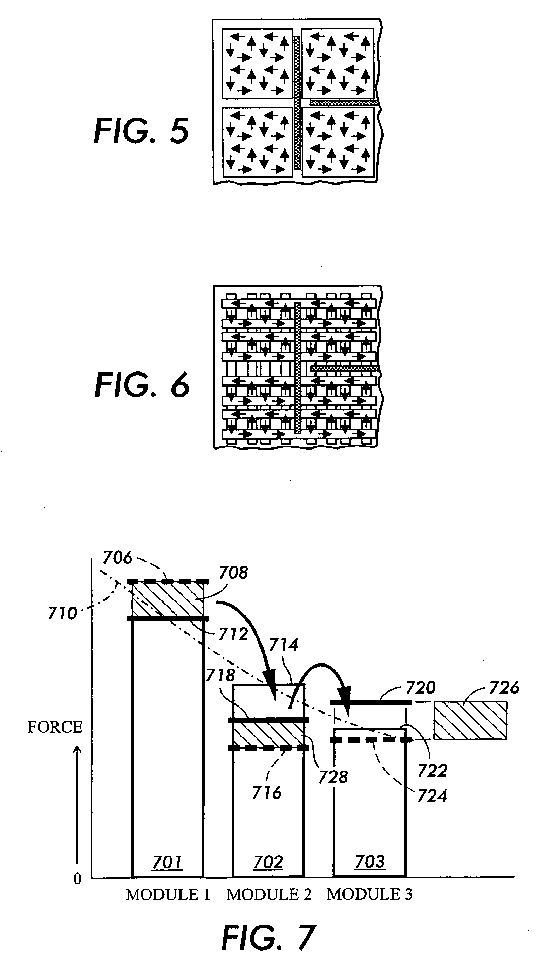

A plurality of actuators may be grouped into actuator modules in varying ways. In various exemplary embodiments, the physical layout of the plurality of actuators is followed, e.g., each cluster of actuators between the sensors becomes a module. An exemplary embodiment of a physical heuristic decomposition of an array of actuators is shown in Fig. 5 (i.e. "tiles"). The advantage of a physical heuristic is that a modular structure of the system leads to a corresponding modular structure of the allocation algorithm. In various exemplary embodiments, for an $8^1/_2$ by 11 inch sheet of paper, which covers about 360 jets, the physical heuristic decomposes the area under the sheet into about 40 modules with up to about 16 actual jets in each module. A module entirely covered by the sheet contains 16 actual jets, with 4 jets for each direction. Even with discrete valves and a single-jet force of $f_{max}$, such a module provides near-continuous force domains for $f_{xi}$ and $f_{yi}$:

$$d_{xi} = d_{yi} = \{-4\,f_{max}, -3\,f_{max}, -2\,f_{max}, -f_{max}, 0, f_{max}, 2\,f_{max}, 3\,f_{max}, 4\,f_{max}\}$$

Another exemplary grouping heuristic is a "follow the constraints" or a logical heuristic. An exemplary embodiment of a logical heuristic grouping of the plurality of actuators is shown in Fig. 6. For example, all x jets with the same y position are interchangeable with respect to the constraints in Eq. (4) which is shown and explained below.

Rows of x jets with the same y position and columns of y jets with the same x position lead to particularly simple allocation functions within a row or column. In one exemplary embodiment, a decomposition of jets where the $N$ modules are divided into $N_x$ "x modules," each with only x-directed jets with a common y position $y_i$, and $N_y$ "y modules," each with only y-directed jets with a common x position $x_i$, is shown in Figure 4. With such an arrangement, the weighting features, $(w_{xi}\,w_{yi}) = (n_{xi}\,0)$ for an x module with $n_{xi}$ jets and $(0\,n_{yi})$ for a y module containing $n_{yi}$ jets.

Grouping/decomposing at one level can greatly simplify the force allocation at another subordinate level. In various exemplary embodiments, for an $8^1/_2$ by 11 inch sheet of paper, the logical heuristic groups the area under the sheet into about 50 modules, each with up to about 12 individual jets.

Referring again to Fig. 4, in step S420, the sub-goal is determined for the current module. In various exemplary embodiments, the sub-goal is a force. The sub-goal or force is represented as:

$$u_i = \text{Solve}(U, n_i, r_i, w_i, n)$$

where $U = (F_x\, F_y\, T_z)^T$ is the desired total force for all modules at the current level, $n$ is the number of modules at the current level, all other inputs are those determined by the decomposition, and output $u_i = (f_{xi} f_{yi} t_{zi})^T$ is the computed allocation for module $i$. In various exemplary embodiments, $U$ is the overall force generated by the goal generation device 130, for example. In other various exemplary embodiments, $U$ is a force allocation instruction from a module from a level that is higher than the level of the current module. Depending on the level in the hierarchy or the number of submodules in the module, step S420 will use instantiations of Eqs. (5) and (6), which are shown and described below.

In step S425, it is determined whether the level that the current module is in is the bottom level of the entire array of actuators. The level is the bottom level if the module is not decomposed into further submodules. In other words, the current module does not allocate any forces to a module in a lower level, but rather the module will provide instructions to the actuators. If the current module level is not the bottom level, then the method proceeds to step S430, wherein the sub-goal is allocated to modules in the next lower level. This allocation is represented as Allocate($u_i$, $I.i$, $n_i$). Otherwise, if in step S425 it is determined that the level that the current module is in is the bottom level, then the method proceeds to step S435, wherein the sub-goal, is assigned to individual actuators. An assignment function is represented as follows:

$$u_{li} = \text{Assign}(u_i, I.i)$$

The assignment function assigns the desired actuation $u_{li}$ to the actuators in module $l.i$. In other words, given desired actuation $\boldsymbol{u}_i = (f_{xi} f_{yi} t_{zi})^T$ and a single actuator, the assignment function may choose $f_{xi}$ for an x jet and $f_{yi}$ for a y jet. For discrete domains, assignment may also apply a thresholding function to choose an element from the domain. For example, for an x jet with domain $\{0, f_{max}\}$, Assign may return $f_{max}$ if $f_{xi}$ is greater than and 0 otherwise. For a module with multiple jets, the assignment process may perform an optimal search. Since allocation is local to a module, it is also possible to precompute optimal assignments and reduce a force assignment to a lookup operation.

The following methods of generating an optimal allocation and assignment of a desired force $\boldsymbol{U}$ given a number of modules (consisting of groups of actuators or single actuators) are used for steps S430 and S435. In various exemplary embodiments, there are $N$ modules with air jets in x and y directions. Each module is located at a position $(x_i, y_i)$ ($i = 1,...,N$) relative to the center of mass of the object, i.e., the module applies its force at position $(x_i, y_i)$. In various exemplary embodiments, the jets should not work against each other while producing $\boldsymbol{U}$ (i.e., actuation should be minimal). Hence, a possible constrained optimization problem capturing such desired behavior is:

$$\begin{aligned} &\underset{f_x, f_y}{\text{minimize}} && \frac{1}{2}\sum_{i=1}^{N}\frac{f_{xi}^2}{w_{xi}^2} + \frac{1}{2}\sum_{i=1}^{N}\frac{f_{yi}^2}{w_{yi}^2} \\ &\text{subject to} && F_x = \sum_{i=1}^{N} f_{xi}, \quad F_y = \sum_{i=1}^{N} f_{yi}, \quad T_z = \sum_{i=1}^{N} x_i f_{yi} - \sum_{i=1}^{N} y_i f_{xi} \qquad \text{Eq. (4)} \end{aligned}$$

where $\boldsymbol{f}_i = (f_{xi} f_{yi})$ are the allocated x and y forces for module jet $i$, and $\boldsymbol{w}_i = (w_{xi}\ w_{yi})$ are the weighting factors for each module's contribution to the x and y force. A large weighting factor causes the module to assume a greater role in meeting the constraints for forces and torque and a smaller role in minimizing the objective function. A small factor emphasizes the objective function. This objective function causes each module to minimize its actuation, while still providing the forces needed by the control. If activation levels are continuous, the solution to this optimization problem is given by:

$$f_{xi} = w_{xi}\left(\frac{F_x}{\sum_{j=1}^{N} w_{xj}} + \frac{T_z - F_y \bar{x} + F_x \bar{y}}{\sigma_x^2 \sum_{j=1}^{N} w_{yj} + \sigma_y^2 \sum_{j=1}^{N} w_{xj}}(\bar{y} - y_i)\right)$$

$$f_{yi} = w_{yi}\left(\frac{F_y}{\sum_{j=1}^{N} w_{yj}} - \frac{T_z - F_y \bar{x} + F_x \bar{y}}{\sigma_x^2 \sum_{j=1}^{N} w_{yj} + \sigma_y^2 \sum_{j=1}^{N} w_{xj}}(\bar{x} - x_i)\right) \qquad \text{Eq. (5)}$$

$$t_{zi} = f_{yi}(x_i - x_i) - f_{xi}(y_i - y_i) = 0$$

for $i = 1,...,N$, where:

$$\bar{x} = \frac{\sum_{i=1}^{N} w_{yi} x_i}{\sum_{i=1}^{N} w_{yi}}, \quad \bar{y} = \frac{\sum_{i=1}^{N} w_{xi} y_i}{\sum_{i=1}^{N} w_{xi}}$$

$$\overline{x^2} = \frac{\sum_{i=1}^{N} w_{yi} x_i^2}{\sum_{i=1}^{N} w_{yi}}, \quad \overline{y^2} = \frac{\sum_{i=1}^{N} w_{xi} y_i^2}{\sum_{i=1}^{N} w_{xi}} \qquad \text{Eq. (6)}$$

$$\sigma_x^2 = \overline{x^2} - \bar{x}^2, \quad \sigma_y^2 = \overline{y^2} - \bar{y}^2$$

The quantities are the weighted average position of all the submodules, and $\sigma_x$, $\sigma_y$ are the weighted standard deviations of all the x and y submodule jet positions about this average. The torque $t_{zi}$ is zero with respect to $(x_i, y_i)$.

These equations provide a continuous solution to the optimization problem. In various exemplary embodiments wherein the domains of the jets are continuous, these equations provide an optimal solution. When implemented with discrete actuators, the optimal solution is approximated with a hierarchical decomposition as the number of jets in each module becomes large (and thus has an almost continuous domain). The implementation with discrete actuators will be discussed below.

The overall forces required by Eqs. (5) and (6) represent a partitioning of the overall task $\boldsymbol{U} = (F_x\ F_y\ T_z)^T$ for a large region into tasks $\boldsymbol{u}_i = (f_{xi} f_{yi}\ 0)^T$ for its subregions or modules.

The solution in Eqs. (5) and (6) to the constrained optimization problem can be instantiated as needed for particular systems. For example, for non-hierarchical allocation to $N_x$ x jets and $N_y$ y jets, each jet "module" includes a single jet and is weighted equally by $(w_{xi}\ w_{yi}) = (1\ 0)$ for an x jet and $(0\ 1)$ for a y jet. The instantiations of Eqs. 5 and 6 are easy to derive.

In a two-level hierarchical allocation, where the system is decomposed into modules consisting of individual jets, weights at the top level can be used to shift assignment of actuation depending on module sizes. For example, for the $i$th module with $n_{xi}$ x jets and $n_{yi}$ y jets, the weights may be selected to be $(w_{xi}\ w_{yi}) = (n_{xi}\ n_{yi})$. Again, the instantiations of Eqs. 5 and 6 can be derived. Allocation within each module is akin to non-hierarchical allocation to the jets in the module, using the same equations.

For a module that is logically decomposed, allocation to the modules instantiating Eqs. (5) and (6) needs only to be computed for $f_{xi}$ or $f_{yi}$ for the x and y modules, respectively, and allocation within a module follows Eq. (7) for x modules and its equivalent for y modules. In various exemplary embodiments, if an array of air jets that has been decomposed by a logical heuristic consists only of $N$ x jets with the same y position, the instantiation of the allocation function for the module, namely, Eq. (5), would be

$$f_{xi} = \frac{F_x}{N},\ f_{yi} = 0,\ t_{zi} = 0\ (i = 1,...,N) \qquad\qquad \text{Eq.(7)}$$

After steps S430 and S435, the method proceeds to step S440, wherein it is determined whether all of the modules have been evaluated, i.e. whether the forces for the modules have to be either further allocated or assigned to individual actuators. In other words, it is determined whether $i$ is equal to $n$, wherein $n$ equals the number of modules in the level. If $i$ is not equal to $n$ (i.e. all the modules have not been evaluated), the method proceeds to step S445.

In step S445, the next module is selected. In other words, $i$ is increased to $i+1$. The method then proceeds back through steps S415 through S440, until $i$ is equal to $n$, the number of modules or actuators within the level. In other words, each module in the level is decomposed, the force for each module is determined and the force for each module is either allocated to a submodule or assigned to individual actuators. If there are no further modules to select, then a next module cannot be selected and in step S440 it will be determined that all of the modules have been evaluated.

If in step S440, it is determined that all the modules have been evaluated, i.e., that $i$ is equal to $n$, then the method proceeds to step S450, wherein the method ends.

The foregoing exemplary embodiment has the property that the allocation within one module does not depend on the allocation within any other module at the same level. In other words, allocations within modules at any given level are completely decoupled from each other and thus can be parallelized and distributed among multiple processors.

Furthermore, the distribution of computation is at the same scale as the actuation. This property is of obvious interest for many actuator systems with very large numbers of actuators.

In the foregoing exemplary embodiment, each call to allocate a force for a module partitions the actuation to the submodules of a given module. This exemplary embodiment is optimal for jets with continuous domains.

The foregoing exemplary embodiment recursively decomposes and allocates actuation to submodules within a module. In other various exemplary embodiments, the recursion terminates when at most $n_{max}$ jets remain in a module or the bottom level has been reached.

The foregoing exemplary embodiment is a recursive method. In other various exemplary embodiments, the method is implemented by an iterative method instead, as will be apparent to one skilled in the art.

In other various exemplary embodiments, the foregoing exemplary allocation method further includes allocating for error in step S430 that is generated during the force allocation of step S430 of a previous module. The error is the difference between the desired goal actuation for a given module and the actually produced actuation.

In one exemplary embodiment, the method of allocating the error is completed by a next module allocation method. The next module allocation method adds the force and torque errors made in allocating $\boldsymbol{u}_{i-1} = (F_{i-1}{}^n, T_{i-1}{}^n)$ to the next module $i$ to be allocated. In particular:

$$F_i^{\,n} = F^{(n-1)}/N_n + \frac{(T^{(n-1)}-\bar{x}F^{(n-1)})}{N_n\sigma_x^2}\,(x_i - \bar{x}) + (1-W)\Delta T^{(n-1)}_{i-1}/x_i + W\Delta F^{(n-1)}_{i-1}$$

where:

$$\Delta T^{(n-1)}_{i-1}$$

$$\Delta F^{(n-1)}_{i-1}$$

are the torque and force errors respectively made during allocation of the $(i{-}1)$th subdomain and $W$ is an error weighting factor reflecting the relative importance of torque versus force errors. If $W$=1, then force errors are only to be considered, while $W$=0 ignores the force errors and considers only torque errors. The $i$th module attempts to correct for the error made during the earlier allocations. Similarly, when all the child modules/submodules have been allocated, the resulting error of the parent module is allocated to the next parent module who passes the error on to its children modules (i.e. its submodules). The order of considering the modules can be important with this embodiment, as well as others. For example, error allocation could be sequential or to a nearest neighbor. In various exemplary embodiments, an allocation from the rim of the object (sheet) to its center ("outside-in) is preferred. With an outside-in allocation, the outer most modules are allocated first. The error generated from this allocation is then allocated to the next outer most modules that are usually on the opposite side of the object. This process is continued until the center module is the last to be allocated. Outer modules apply the largest torques on the object. Any errors made by the outer modules tend to cancel each other out, leaving smaller errors to be dealt with by the inner modules that can deliver smaller torques.

In another exemplary embodiment, the error allocation method is a universal error allocation. In the universal error allocation method, the error generated is allocated to all of the remaining modules within the current level. This error allocation is accomplished by adjusting $T^{(n-1)}$ and $F^{(n-1)}$ by the error caused by allocation of the current module. The allocation of the next subdomain uses the new goals. Fig. 7 displays a chart that displays decomposition of a system into modules 701, 702, and 703 for modules 1, 2, and 3 respectively, to approximate a continuous force represented by dot-dashed curved line 710. Each module attempts to represent the average continuous force density within its boundaries. For module 1, this force is 712. The actual force delivered in this module is 706 denoted by the dashed line. The error therefore is given by the cross hatched square 708. The error 708 is subtracted from the average continuous force 714 to give the next desired force, 718, the thick line in module 2. The error 708 is subtracted from 714 because the delivered force was too large in module 1 compared to the desired force 712. The force delivered in module 2 is given by 716 (dashed line), which is too small compared to the total desired force 718 denoted by the thick line, giving an error for module 2 given by 728. This error 728 is added to the desired average continuous force 722 to given the desired module 3 force 720 (thick line). The actual delivered force in module 3 is 724 denoted by the dashed line. The error is therefore 726 for the combination of all three modules. The error scheme presented in Fig. 7 is just one of many. Another possibility includes assigning equal fractions of each module error to the others.

Because of the error allocation methods, according to the present invention, the local allocations of force do not have to be absolutely optimal; global allocation is important.

The hybrid hierarchical-optimal algorithms of the present invention work well for all numbers of actuators from small traditional systems to many actuator systems conceived with thousands of actuators. These hybrid algorithms represent a general approach to high-dimensional problems. In other words, exemplary embodiments of the present invention use a continuous solution to break the problem up into a number of smaller self-similar problems that can either be further reduced in size or solved using optimal solutions. This present invention also has general application in other many degree of freedom systems such as robotic systems, such as, but not limited to, temperature-sensitive micro-robots (i.e. "smart dust"), and large-scale factories.

Experimental results of an exemplary embodiment of this invention are disclosed in a commonly owned co-pending application filed on April 6, 2001 in the name of Warren B. Jackson and Markus P.J. Fromherz; the disclosure of the application is herein incorporated by reference in its entirety.

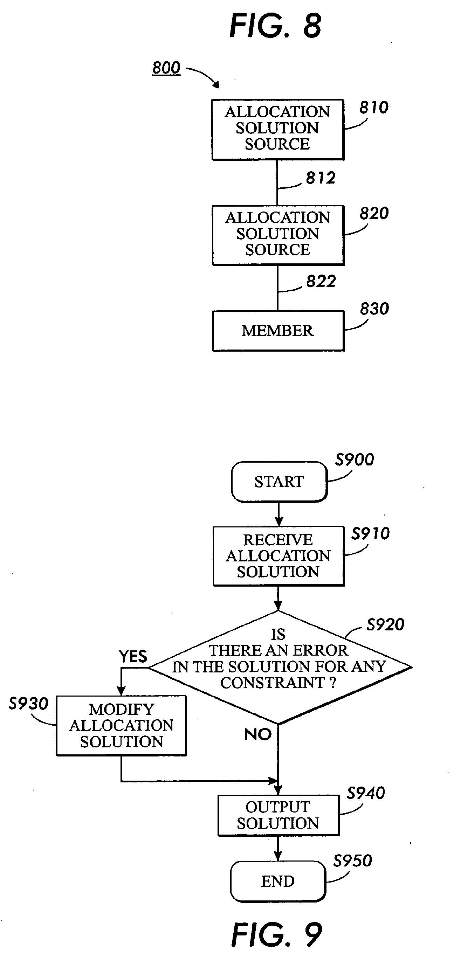

Fig. 8 displays a schematic representation of an allocation system 800 that provides an allocation solution incrementally for actuating a plurality of implementation units. The allocation system 800 generates an allocation solution and modifies (i.e. "corrects" or "repairs") the allocation solution if the allocation solution has an error.

The allocation system 800 includes an allocation solution source 810, a solution modification unit 820 and a member 830 that is to be provided with a solution for actuation or further allocation.

The member 830 in various exemplary embodiments is an implementation unit, such as, but not limited to the implementation units 150, shown in Fig. 1. In other various exemplary embodiments, the member 830 is a plurality of implementation units or a module implementation unit, such as, but not limited to module implementation units 170 shown in Fig. 1. In other various exemplary embodiments, the member 830 is an entire array of actuators, such as, but not limited to the array of actuators 220 shown in Fig. 2. Yet in other various exemplary embodiments, the member 830 is an individual module allocator, such as, but not limited to, module allocator 192 shown in Fig. 1.

The allocation solution source 810 can be any device or system that provides an allocation solution. The allocation solution source 810 provides the allocation solution to the solution modification unit 820 by a link 812. The allocation solution may either be given (e.g., from a previous solution to a similar problem), or it may be generated by a very simple allocation algorithm. In various exemplary embodiments, the allocation solution source is the allocator 110, shown in Fig. 1. In other various exemplary embodiments, the allocation solution source utilizes any known or later developed method for creating an allocation solution for actuating a plurality of implementation units.

The solution modification unit 820 receives the allocation solution and generates a modified allocation solution based on the physical or design capabilities of the member 830. The solution modification unit 820 provides the modified allocation solution to the member 830 by a link 822. The solution modification unit 820 generates the modified allocation solution by approximately solving the allocation problem by starting from the initial allocation solution, provided by the allocation solution source 810, and making changes to the solution in order to decrease errors in one or more constraints while keeping all other errors unchanged.

The solution modification unit 820 can be implemented as software executing on a programmed general purpose computer, a special purpose computer, a microprocessor or the like. The solution modification unit 820 can also be implemented by physically incorporating it into a software and/or hardware system.

The links 812 and 822 can each be any known or later developed device or system for connecting the allocation solution source, the solution modification unit and the member 830, respectively, including a wire, a direct cable connection, a connection over a wide area network or a local area network, a connection over an intranet, a wireless connection, a connection over the Internet, or a connection over any other distributed processing network or system. In general, the links 812 and 822 can be any known or later developed communication system or structure usable to connect the respective units.

It should be appreciated that the allocation solution source 810, the solution modification unit 820 and the member 830 do not have to be physically located together. Furthermore, it should be appreciated that the allocation solution source 810 and the solution modification unit 820 can be integrated into a single device.

Fig. 9 displays one exemplary embodiment of a method that may be utilized by the solution modification unit 820. The method starts at step S900 and continues to step S910, wherein the allocation solution is received.

In step S920, it is determined whether there is an error in the allocation solution. Typically, the allocation solution includes discrepancies, i.e. errors, in satisfying the constraints of the member. The error is defined on a constraint or goal basis, wherein an error exists if there is a discrepancy between what the allocation solution is requesting the member to carry out with regard to a particular constraint or goal and what the member will carry out for that constraint or goal (i.e. an expected operation). In various exemplary embodiments, a constraint or goal may be the torque to be applied to an object by the member, and the torque to be applied by the allocation solution by the member may be greater than the torque requested by the allocation solution torque, possibly because another constraint, such as a particular directional force, also has requirements for the member to satisfy. For example, there may be the two constraints such as "the sum of the forces = total y-force" and "the sum of the forces times their x positions = total z-torque." An allocation solution specifies which forces are on, and thus the sum in one or the other constraint may not become equal to the desired total force or torque. If it is determined that there is an error, then the method proceeds to step S930. Otherwise, the method proceeds to step S940.

In step S930, the allocation solution is modified. The method searches the capabilities of the member to determine if any parts of the solution can be modified to reduce the error while maintaining the status of the other constraints. It should be appreciated that the allocation solution may contain errors in a plurality of, or all of, the possible constraints. Thus, the status of the other constraints that is to be maintained in this step may be a current level or amount of error. For example, in various exemplary embodiments there may be two constraints such as "the sum of the forces = total y-force" and "the sum of the forces times their x positions = total z-torque and these constraints may both be violated, i.e., there may be an error in both constraints. In various exemplary embodiments, the torque error can be improved without changing the force error. The method then proceeds to step S940.

In step S940, the method outputs a solution. If the allocation solution was modified in step S930, then the modified allocation solution is output. Otherwise, the initial allocation solution is output. The method ends at step S950.

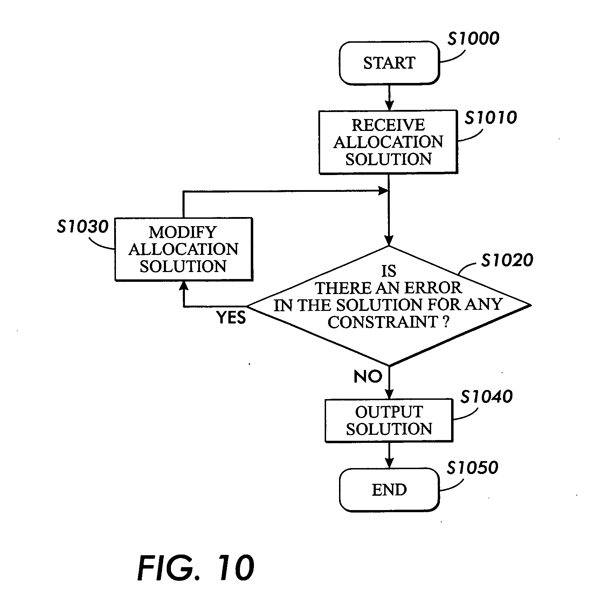

Fig. 10 displays another exemplary embodiment of a method that may be utilized by the solution modification unit 820. This method is identical to the method displayed in Fig. 9, in that it includes steps S1000, S1010, S1020, S1030, S1040 and S1050, which are identical to steps S900, S910, S920, S930, S940 and S950, respectively. However the method displayed in Fig. 10 differs from the method displayed in Fig. 9 in the following respect. After the allocation solution is modified in step S1030, rather than proceeding to step S1040, (step S940 in Fig. 9), the method loops back to step S1020, (step S920 in Fig. 9). In various exemplary embodiments, the method may terminate the loop if the solution reaches a threshold. In various exemplary embodiments, the threshold is reached when the solution has no more errors or the solution has reached an acceptable error tolerance. In other exemplary embodiments, the threshold is a certain number of iterations. In other exemplary embodiments, the threshold is a specific amount of execution time. When the threshold is reached, the method proceeds from S1020 to S1040.

In other words, the allocation solution may be modified multiple times in step S1030. Multiple modifications of the allocation solution monotonically improve the solution, and thus this method also has the anytime property (i.e., it always has a solution when exiting the loop and proceeding from S1020 to S1040, and the more time that is available the better the solution).

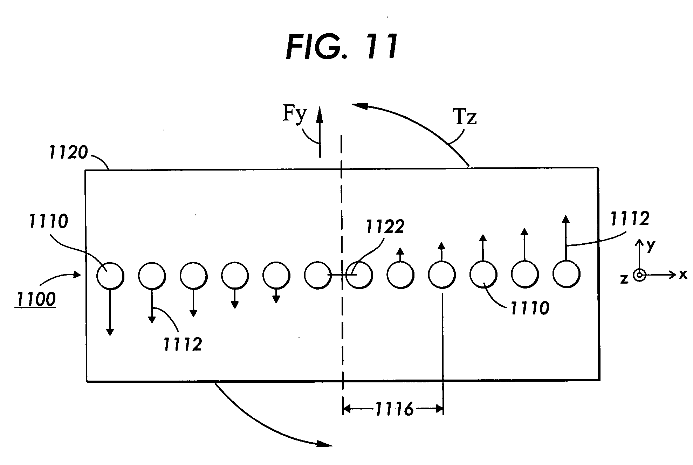

Fig. 11 is a schematic of one exemplary embodiment of an array of actuators 1100. The array 1100 includes actuators 1110 that are aligned in an x-direction. This exemplary embodiment is provided to illustrate an example of the operation of the solution modification unit 820, shown in Fig. 8.

Each of the individual actuators 1110 apply a force 1112 to a planar object 1120 in a y-direction. The object 1120 moves in the y-direction and/or spins around the z-axis located at the object's center of mass 1122. For simplicity it is assumed that each actuator 1110, $i$, can deliver a force $f_i$, that either can be directed in a negative y-direction, a positive y-direction, or turned off. There are no x-directed forces in this exemplary embodiment. If the array 1100 applies a force to the object 1120 and it is desired that the object 1120 follow a given trajectory, a decision must be made about the force applied by each actuator 1110 in order to generate the desired motion, as discussed above.

An allocation solution for actuation of the array 1100 is provided by any conventional or later developed methods and/or techniques, or any of the methods of the present invention described herein. The allocation goal for the entire array 1100 for this exemplary embodiment includes a y-force $F_y$ and z-torque $T_z$. The allocation solution for the entire array 1100 for this exemplary embodiment are the forces $f_i$ selected for actuators 1110, $i$. The actual y-force $F'_y$ of the array 1100 is defined as $F'_y = \Sigma f_i$. The actual z-torque $T'_z$ of the array 1100 is defined as $T'_z = \Sigma x_i f_i$. The $x_i$ 1116 is the position of actuator $i$ with respect to the center of mass 1122 of the object 1120. The error with respect to the y-force constraint is defined as the difference between the goal $F_y$ and the actual y-force $F'_y$ determined by the allocation solution. The error with respect to the z-torque constraint is defined as the difference between the goal $T_z$ and the actual z-torque $T'_z$ determined by the allocation solution.

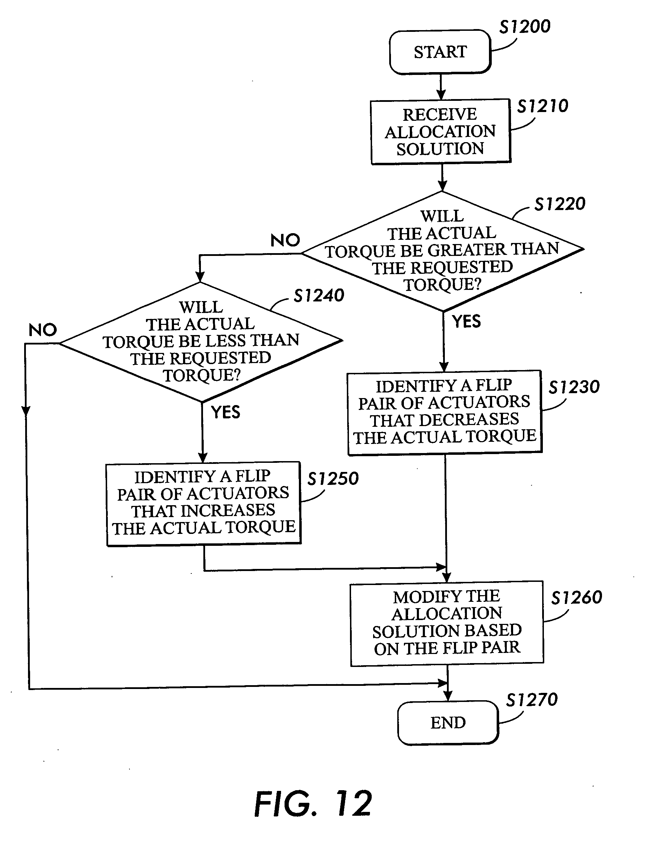

Fig. 12 is an exemplary embodiment of a solution modification method according to the present invention and is explained with reference to the array of actuators 1100 of Fig. 11. This exemplary embodiment considers actuator modifications that will decrease the error in the allocation provided to the array. Such modifications are made by searching for two actuators whose states can be flipped in such a way that the selected error is decreased by the largest-possible amount. This is particularly interesting if the relevant factors for the search can be precomputed and stored in a table that enables fast lookup of the optimal flipping pair instead of having to search for it.

The method starts at step S1200 and continues to step S1210, wherein the allocation solution for all $f_i$ of the array is received. An allocation solution may be received from various methods, including but not limited to the method described above.

Typically, the allocation solution includes errors in satisfying the constraints of the array. In this exemplary embodiment, to reduce the error, changes in the allocation solution are sought that reduce the error in satisfying one constraint while holding the error for others constant. In this exemplary embodiment, the error to be reduced is the error in the torque constraint. Such changes are made by searching for two actuators whose states can be flipped (i. e. a flip pair) in such a way that the selected error is decreased by the largest-possible amount. A flip pair is a pair of actuators where the force of one actuator is decreased and the force of the other is increased by the same amount (which changes the total z-torque but not the total y-force). In Step S1220, it is determined whether the actual torque $T_z$ that will be applied based on the initial allocation solution less the torque required by the allocation goal $T_z$ is greater than zero. If yes, then the method proceeds to step S1230, wherein the method searches for a flip pair of actuators that decreases $T'_z$ towards $T_z$. The method then proceeds to step S1260.

If in step S1220, it is determined that $T'_z - T_z$ is not greater than zero, then the method proceeds to step S1240, wherein it is determined whether the actual torque $T'_z$ that will be applied based on the initial allocation solution less the torque required by the allocation solution $T_z$ is less than zero. If yes, then the method proceeds to step S1230, wherein the method searches for a flip pair of actuators that increases $T'_z$ towards $T_z$. The method then proceeds to step S1260. Otherwise, the method proceeds to step S1270.

In step S1260, the allocation solution is modified based on the flip pair found by the searching of step S1230 or S1240. The method ends at step S1270. However, it should be appreciated that similar to the method displayed in Fig. 10, the method displayed in Fig. 12, could, in various other exemplary embodiment, include a loop, whereby the modified solution is again checked for errors.

In various exemplary embodiments, the relevant factors for the search in steps S1230 and S1240 are precomputed and stored in a lookup table, which enables fast lookup of the optimal flipping pair.

To minimize the error, the actuation of two actuators 1110, shown in Fig. 11, are flipped. In other words, the force $f_i$ is increased for one actuator $i$ and the force $f_j$ is decreased for another actuator $j$ by an equal amount. By flipping the forces of two actuators, the force $F'_y$ for the entire array 1100 remains unchanged, but the error $|T'_z-T_z|$ may be decreased. Given a force domain $\{-f_{max}, 0, f_{max}\}$, flipping forces $f_i$ and $f_j$ changes $T'_z$ by $(x_i-x_j)f_{max}$ ($f_i$ is increased by $f_{max}$ from $-f_{max}$ or 0, and $f_j$ is decreased by $f_{max}$ from 0 or $f_{max}$). Thus, the possible improvements in $T'_z$ depend on the relative positions $x_i$ and $x_j$ of the actuators that are to be flipped.

Only relative positions of the actuators 1110 are needed to decide which actuators 1110 to modify (flip). In various exemplary embodiments, a lookup table with elements $d(i,j)$ is precomputed to identify the relative distances of the actuators and encode the relation $d(i,j) = x_i - x_j$ (for all actuators $i$ and $j$). In general, the lookup table is an $n$x$n$ matrix for $n$ actuators. Table 1 shows an exemplary lookup table for $n = 5$ where all actuators are exactly 1 unit apart from each other.

TABLE 1

| 0 | -1 | -2 | -3 | -4 |
|---|---|---|---|---|
| 1 | 0 | -1 | -2 | -3 |
| 2 | 1 | 0 | -1 | -2 |
| 3 | 2 | 1 | 0 | -1 |
| 4 | 3 | 2 | 1 | 0 |

In other various exemplary embodiments, only half of the lookup table is computed. This is because the table is often symmetrical depending on the array of actuators. For example, in the example shown in Table 1, $d(i,j) = - d(j, i)$ and $d(i,i) = 0$. If the actuators are positioned on a regular grid with spacing $s$, i.e., $x_{i+1} - x_i = s$ for all $i$, it is sufficient to compute the row $d(1,j)$, $j>1$, since $d(i,j) = d(1,j-i+1)$ for $j>i$ (also, $d(i,j) = (j-i) s$).

The method searches half the table until it finds an admissible flip pair $(i,j)$. (Given current actuator states $f'_i$ and $f'_j$, a flip pair $(i,j)$ is admissible if $f_i \leq 0$ and $f'_j \geq 0$.) If there are multiple admissible flip pairs in the same set, additional criteria can be used to break the tie, such as the number of actuators turned on after the flip.

The following is one exemplary pseudo-code for modifying an allocation solution according to the present invention, wherein given a lookup table $d$ and actuator allocation solution $f'_i$, $i = 1,..,n$, a method of the present invention determines a new solution $f_i$, $i = 1,..,n$, by flipping two of the actuators if possible.

$f_i = f'_i$ for all $i = 1,..,n$ (default solution)
if $T'_z-T_z > 0$ then (search for flip that decreases $T'_z$ towards $T_z$,
    find pair $(i,j)$ ($i = 1,..,n$-1 and $j = i + 1,..,n$) such that
        $f'_i \leq 0$ and $f'_j \geq 0$
        and $|T'_z-T_z + d(i,j)f_{max}|$ minimal
        and additional criteria are optimized for the same improvement
else if $T'_z-T_z < 0$ (search for flip that increases $T'_z$ towards $T_z$)
    find pair $(i,j)$ ($i = 2,..,n$ and $j = 1,..,i$-1) such that
        $f'_i \leq 0$ and $f'_j \geq 0$
        and $|T'_z-T_z - d(j,i)f_{max}|$ minimal
        and additional criteria are optimized for the same improvement
end
if such a pair $(i,j)$ was found then (flip actuator states)

$$f_i = f_i + f_{max}$$

$$f_j = f_j - f_{max}$$

end.

In other various exemplary embodiments, the elements in the precomputed lookup table are further sorted in order of decreasing change. A sequence of sets $S_k$ of actuator pair indices ($k = 1,..,n$-1) are computed, where each set of pairs denotes actuator flips with equal change. Together with each set $S_k$, the distance $dk$ for pairs in the set is determined and recorded. In the foregoing example shown in Fig. 11 and Table 1, for all pairs $(i,j)$ in set $S_k$, $d(i,j) = (n-k)$ and $s = d_k$. For example, the foregoing lookup table in Table 1 can be replaced by the following sequence:

$$S_1 = \{(1,5)\}, d_1 = 4$$

$$S_2 = \{(1,4),(2,5)\},\ d_2 = 3$$

$$S_3 = \{(1,3),(2,4),(3,5)\},\ d_3 = 2$$

$$S_4 = \{(1,2),\ (2,3),\ (3,4),(4,5)\},\ d_4 = 1$$

In other words, the table elements are grouped into ranked equivalence classes with respect to the metric of interest. The method of this embodiment then searches the sequence until an admissible flip pair is found and reaches a position in the sequence from which no further improvements are possible.

In other various exemplary embodiments, the lookup table encodes metrics other than just the change in one error. For example, the flipping configuration with the goal of reducing a weighted sum of $F_y$ and $T_z$ errors can be evaluated. In other words, a flip pair is accepted if it reduces a combination of errors.

In other various exemplary embodiments, $k$-actuator switching combinations are searched that reduce the weighted error, where $k = 2,..,n$. For example, one actuator at distance x from the center of mass could be flipped and two actuators at $^x/_2$ could be flipped.

It should be appreciated that the modification of the allocation solution is not restricted to any particular number of constraints and to switching exactly two actuators. It should be appreciated that there may be any number of constraints (at least one), the method may change any number of actuators (at least one) in the solution to improve the solution, and the method may improve multiple constraints at a time. Thus, as an example, if the intention is to switch three actuator states at a time, the lookup table would become a three-dimensional matrix (instead of a two-dimensional shown above), and each element $d(i,j,k)$ at position $(i,j,k)$ in the matrix would show how much the solution improves by changing actuators $i$, $j$ and $k$. As another example, if the goal is to improve multiple constraints at a time, the lookup table may encode the improvement in more than one constraint.

As indicated in the embodiment shown in Fig. 10, the modification of the allocation solution can be performed multiple times and as such, the flipping operation can be performed multiple times in order to further improve a solution.

Further, it will be appreciated that any embodiment of the solution modification methods of this invention can be applied successively to reduce the error in multiple constraints.

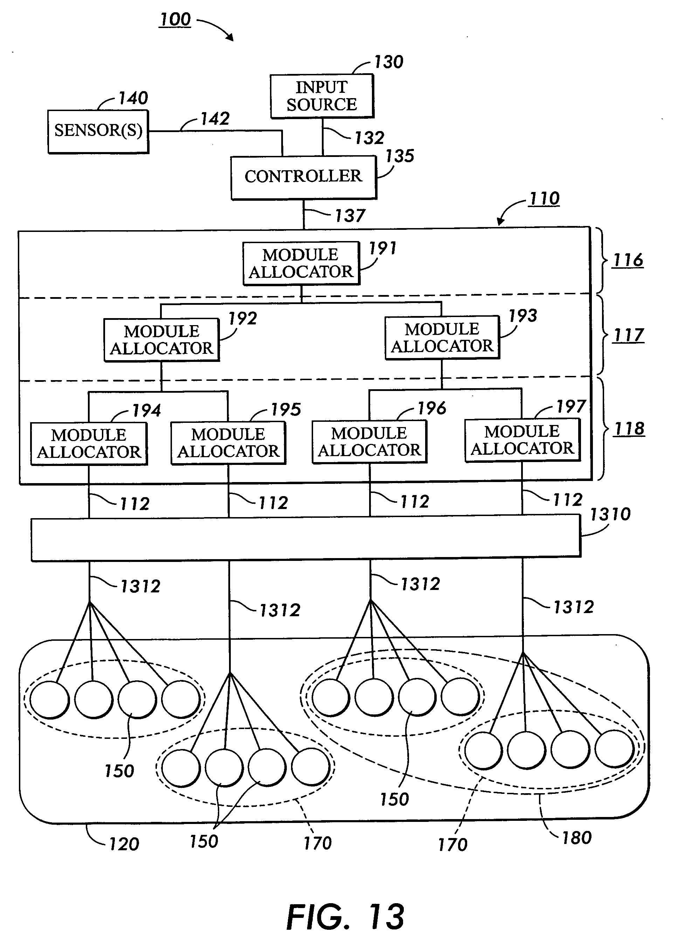

Fig. 13 displays a schematic of an exemplary embodiment of the many element system 100 of Fig. 1, further including a solution modification unit 1310. This exemplary embodiment displays how a solution modification unit, according to the present invention, can be combined with a hierarchical allocator. The solution modification unit 1310 is an exemplary embodiment of the solution modification unit 820, shown in Fig. 8.

The solution modification unit 1310 is disposed between the allocator 110 and the plurality of implementation units. The links 112' connect the allocator 110 to the solution modification unit 1310. Links 1312 connect the solution modification unit 1310 to the plurality of implementation units 120. The links 112' and 1312 are identical to the links 112.

The allocator 110 provides an allocation solution for controlling the plurality of implementation units to the solution modification unit 1310 by links 112'. The solution modification unit modifies the solution depending on any errors found in the solution based on the methods of this invention, including, but not limited to the foregoing exemplary embodiments. If the solution modification unit 1310 does not find errors in the allocation solution, the solution modification unit 1310 sends the original allocation solution to the plurality of implementation units 120 by links 1312. If the solution modification unit 1310 does determine that there are errors in the allocation solution, the solution modification unit 1310 sends the modified allocation solution to the plurality of implementation units 120 by links 1312.

In various exemplary embodiments, the solution modification unit 1310 reuses precomputed information about the implementation unit modules 170 and 180 such that only a search for local actuator changes in each module is required.

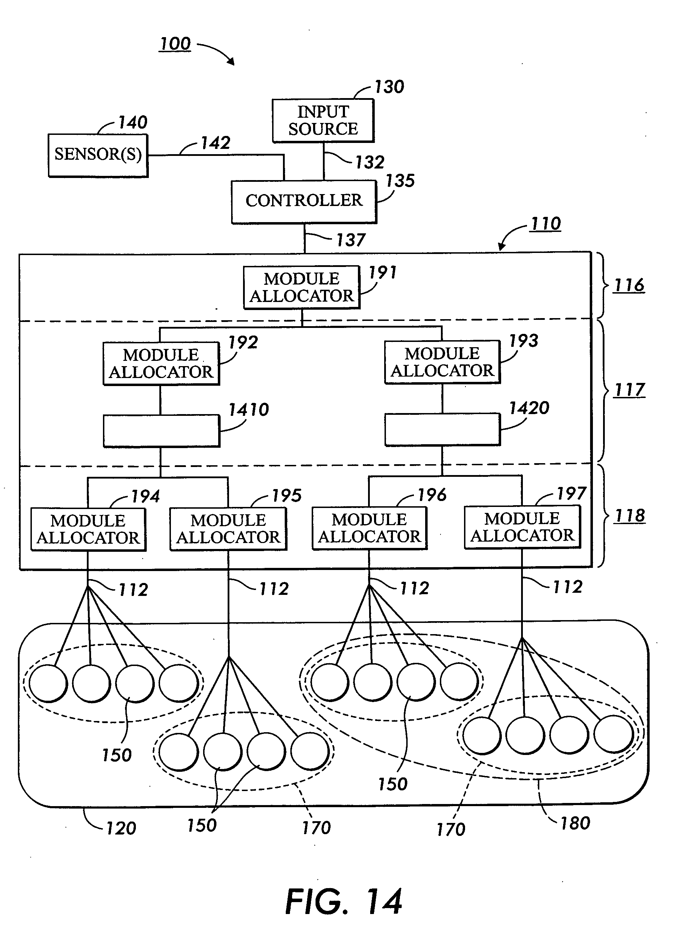

In various exemplary embodiments, solution modification units or allocation solution modification methods according to this invention do not have to provide a modified solution directly to the implementation units. Rather, modification units and methods of this invention can provide modified solutions to allocators. For example, a solution modification unit according to this invention can be combined at an intermediate level of a hierarchical allocator. Fig. 14 displays a schematic of one exemplary embodiment, wherein the many element system 100 of Fig. 1, further includes solution modification units 1410 and 1420 disposed within the middle allocation level 117. The solution modification units 1410, 1420 are exemplary embodiments of the solution modification unit 820, shown in Fig. 8.

The solution modification units 1410, 1420 are disposed within the allocator 110. The solution modification unit 1410 is disposed between the module allocator 192 and the module allocators 194 and 195. The solution modification unit 1410 receives the allocation solution from the module actuator 192 and performs the allocation solution modification methods of this invention, including the exemplary methods described above, to modify the allocation solution if necessary and provides the modified solution to the module allocators 194 and 195.

The solution modification unit 1420 is disposed between the module allocator 193 and the module allocators 196 and 197. The solution modification unit 1420 receives the allocation solution from the module actuator 193 and performs the allocation modification methods of this invention, including the exemplary methods described above, to modify the allocation solution if necessary and provides the modified solution to the module allocators 196 and 197.

While this invention has been described in conjunction with the specific embodiments outlined above, it is evident that many alternatives, modifications and variations will be apparent to those skilled in the art. Accordingly, the preferred embodiments of the invention, as set forth above, are intended to be illustrative, not limiting. Various changes may be made without departing from the spirit and scope of this invention.

## Claims

1. An implementation unit system, comprising:

    an allocator that provides an allocation solution;
    a solution modification unit that receives the allocation solution and generates a modified allocation solution; and
    a member having at least one operation constraint and that performs an operation based on the modified allocation solution and the at least one operation constraint,

    wherein the solution modification unit generates the modified allocation solution by altering the allocation solution for the operation of the member to decrease an error for the at least one operation constraint and maintaining an allocation status of other operation constraints.

2. The implementation unit system as recited in claim 1, wherein:

    the member is a plurality of air jets.

3. The implementation unit system as recited in claim 2, wherein:

    the operation is a jet of air in at least one direction.

4. The implementation system as recited in claim 3, wherein:

    the solution modification unit determines a flip pair of the plurality of air jets that can be altered to decrease the error for the at least one operation constraint and maintains an allocation status of other operation constraints.

5. The implementation unit system as recited in claim 1, wherein the solution modification system is integral with the allocator.

6. The implementation unit system as recited in claim 1, wherein:

    the allocator includes a plurality of hierarchical allocation levels and the solution modification unit is disposed between two of the plurality of hierarchical allocation levels.

7. A method for modifying an allocation solution for an implementation system having a plurality of implementation units, comprising:

    determining whether the allocation solution includes an error for at least one operation constraint of the implementation units; and
    if there is an error, developing a modified allocation solution by altering the allocation solution for an operation of at least one of the implementation units to decrease the error for the at least one operation constraint and maintaining an allocation status of at least one other operation constraint.

8. The method for modifying an allocation solution as recited in claim 7, wherein:

the determining step includes determining whether there is a discrepancy between a requested operation by the allocation solution for at least one of the plurality of implementation units and an expected operation of the at least one of the plurality of implementation units.

9.  A method of modifying an allocation solution for an array of actuators, comprising:

identifying whether the allocation solution has any discrepancies between a requested performance of the array of actuators and an expected actual performance of the array of actuators for at least one operation constraint for the array of actuators; and

modifying the allocation solution to reduce the discrepancies for the at least one operation constraint while maintaining at least one other operation constraint for the array of actuators, if it is determined in the identifying step that there are discrepancies.

10. The method of modifying an allocation solution as recited in claim 9, further comprising:

repeating the identifying step and the modifying step until a discrepancy tolerance is reached.

FIG. 1

FIG. 2

FIG. 3

# FIG. 4

START — S400

RECEIVE GOAL — S405

SELECT A MODULE (LET i = 1) — S410

DECOMPOSE SELECTED MODULE (I,i) — S415

DETERMINE SUB-GOAL FOR SELECTED MODULE — S420

IS THE MODULE IN THE BOTTOM ALLOCATION LEVEL ? — S425

NO

YES

ASSIGN SUB-GOAL — S435

ALLOCATE SUB-GOAL — S430

SELECT NEXT MODULE ( i = i + 1 ) — S445

HAVE ALL THE MODULES IN THE ALLOCATION LEVEL BEEN EVALUATED ? (IS i = n ?) — S440

NO

YES

END — S450

*FIG. 5*

*FIG. 6*

*FIG. 7*

## FIG. 8

*800*

```
        ┌─────────────┐
        │ ALLOCATION  │  810
        │  SOLUTION   │
        │   SOURCE    │
        └──────┬──────┘
               │ 812
        ┌──────┴──────┐
        │ ALLOCATION  │  820
        │  SOLUTION   │
        │   SOURCE    │
        └──────┬──────┘
               │ 822
        ┌──────┴──────┐  830
        │   MEMBER    │
        └─────────────┘
```

```
          ┌───────────┐
          │   START   │  S900
          └─────┬─────┘
          ┌─────┴─────┐
          │  RECEIVE  │  S910
          │ ALLOCATION│
          │  SOLUTION │
          └─────┬─────┘
                │
               ╱ ╲
              ╱   ╲
        YES  ╱  IS  ╲   S920
        ◄───╱ THERE AN ERROR ╲
            ╲IN THE SOLUTION FOR ANY╱
             ╲ CONSTRAINT ? ╱
              ╲   ╱
               ╲ ╱  NO
     ┌─────────┴─┐  │
S930 │  MODIFY   │  │
     │ ALLOCATION│  │
     │  SOLUTION │  │
     └─────┬─────┘  │
           └────────┤
                    │
          ┌─────────┴─┐  S940
          │  OUTPUT   │
          │  SOLUTION │
          └─────┬─────┘
          ┌─────┴─────┐  S950
          │    END    │
          └───────────┘
```

## FIG. 9

START — S1000

↓

RECEIVE
ALLOCATION
SOLUTION — S1010

↓

S1030 — MODIFY
ALLOCATION
SOLUTION

S1020 — IS
THERE AN ERROR
IN THE SOLUTION FOR ANY
CONSTRAINT ?

YES

NO

↓

OUTPUT
SOLUTION — S1040

↓

END — S1050

## FIG. 10

## FIG. 11

1112

Tz

Fy

1120

1110

1100

1110

1112

1122

1116

x

y

z

START — *S1200*

RECEIVE ALLOCATION SOLUTION — *S1210*

WILL THE ACTUAL TORQUE BE GREATER THAN THE REQUESTED TORQUE? — *S1220*

NO

YES

WILL THE ACTUAL TORQUE BE LESS THAN THE REQUESTED TORQUE? — *S1240*

NO

YES

IDENTIFY A FLIP PAIR OF ACTUATORS THAT DECREASES THE ACTUAL TORQUE — *S1230*

IDENTIFY A FLIP PAIR OF ACTUATORS THAT INCREASES THE ACTUAL TORQUE — *S1250*

MODIFY THE ALLOCATION SOLUTION BASED ON THE FLIP PAIR — *S1260*

END — *S1270*

## FIG. 12

FIG. 13

FIG. 14